# EUROPEAN PATENT APPLICATION

(11) **EP 4 496 374 A1**
(43) Date of publication of application: **22.01.2025**
(21) Application number: 22931415.8
(22) Date of filing: 17.03.2022
(51) Int. Cl.: H04W 24/08

(54) **METHODS FOR INDICATING RADIO RESOURCE MANAGEMENT (RRM) REQUIREMENT ENHANCEMENT AND APPARATUSES THEREFOR**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2022/081551
(87) International publication number: WO 2023/173380

(57) **Abstract**

Disclosed in the embodiments of the present disclosure are methods for indicating radio resource management (RRM) requirement enhancement and apparatuses therefor, which can be applied to the technical field of communications. A method executed by a terminal device comprises: receiving first indication information, which is sent by a network device and is used for indicating RRM requirement enhancement; and the terminal device then performing RRM requirement enhancement according to the first indication information, and executing RRM measurement according to the enhanced RRM requirement, so as to ensure timely completion of the RRM measurement, thereby improving the mobility performance of the terminal device.

## Description

### TECHNICAL FIELD

The disclosure relates to a field of communication technology, in particular to a method for indicating radio resource management (RRM) requirement enhancement and an apparatus therefor.

### BACKGROUND

In a non-terrestrial network (NTN) system, satellites to which a terminal device is connected may be satellites in different orbits, such as, a geostationary earth orbiting (GEO) satellite, a medium earth orbiting (MEO) satellite, and a low earth orbiting (LEO) satellite. Since the satellites in different orbits move at different speeds relative to ground, radio resource management (RRM) requirements for cells covered by different satellites may be different.

### SUMMARY

Embodiments of the disclosure provide a method for indicating radio resource management (RRM) requirement enhancement and an apparatus for indicating radio resource management (RRM) requirement enhancement.

According to a first aspect of the embodiments of the disclosure, a method for indicating RRM requirement enhancement, performed by a terminal device, is provided. The method includes:
receiving first indication information sent by a network device, in which the first indication information is configured to indicate RRM requirement enhancement.

In the disclosure, the terminal device may receive the first indication information for indicating the RRM requirement enhancement sent by the network device, and then performs the RRM requirement enhancement according to the first indication information. The terminal device performs a RRM measurement according to an enhanced RRM requirement to ensure that the RRM measurement is completed in time, thereby improving a mobility performance of the terminal device.

Optionally, receiving the first indication information sent by the network device includes:
receiving the first indication information sent by the network device via a radio resource control (RRC) signaling, in which the terminal device is in an RRC connected state; or
receiving the first indication information sent by the network device via a broadcast message, in which the terminal device is in an RRC idle state or an RRC inactive state.

Optionally, the method further includes:
sending second indication information to the network device, in which the second indication information is configured to indicate that the terminal device supports the RRM requirement enhancement.

Optionally, the terminal device supports the RRM requirement enhancement.

Optionally, the terminal device is located in a cell covered by a low earth orbiting satellite, and the method further includes:
receiving, by the terminal device, the first indication information, and performing measurement according to a first RRM requirement; or
receiving, by the terminal device, the first indication information, and performing measurement according to a first RRM requirement, in which the terminal device supports the RRM requirement enhancement; or
withholding receiving, by the terminal device, the first indication information, and performing measurement according to a second RRM requirement; or
performing measurement according to a second RRM requirement, in which the terminal device does not support the RRM requirement enhancement.

Optionally, the method further includes:
determining the first RRM requirement and the second RRM requirement according to an agreement of a protocol; or
determining the first RRM requirement and the second RRM requirement according to a configuration of the network device.

Optionally, the RRM requirement enhancement includes at least one of:
mobility requirement enhancement in an idle and an inactive state;
mobility requirement enhancement in a connected state;
terminal transmission timing requirement enhancement;
layer-1 (L1) reference signal receiving power (RSRP) measurement and evaluation requirement enhancement;
bidirectional forwarding detection (BFD) measurement and evaluation requirement enhancement;
candidate beam detection (CBD) measurement and evaluation requirement enhancement;
radio link monitoring (RLM) requirement; or
RRM measurement and accuracy requirement enhancement.

According to a second aspect of embodiments of the disclosure, another method for indicating RRM requirement enhancement, performed by a network device, is provided. The method includes:
sending first indication information to a terminal device, in which the first indication information is configured to indicate RRM requirement enhancement.

In the disclosure, the network device may send the first indication information for indicating the RRM requirement enhancement to the terminal device. The terminal device may perform the RRM requirement enhancement according to the first indication information and perform a RRM measurement according to an enhanced RRM requirement to ensure that the RRM measurement is completed in time, thereby improving a mobility performance of the terminal device.

Optionally, sending the first indication information to the terminal device, includes:
sending the first indication information to the terminal device via an RRC signaling, in which the terminal device is in an RRC connected state; or
sending the first indication information to the terminal device via a broadcast message, in which the terminal device is in an RRC idle state or an RRC inactive state.

Optionally, the method includes:
receiving second indication information sent by the terminal device, in which the second indication information is configured to indicate that the terminal device supports the RRM requirement enhancement.

Optionally, sending the first indication information to the terminal device includes:
determining that the terminal device supports the RRM requirement enhancement, and sending the first indication information to the terminal device; or
determining that the terminal device does not support the RRM requirement enhancement, and withholding sending the first indication information to the terminal device.

Optionally, the RRM requirement enhancement includes at least one of:
mobility requirement enhancement in the idle and inactive states;
mobility requirement enhancement in the connected state;
terminal transmission timing requirement enhancement;
L1 RSRP measurement and evaluation requirement enhancement;
BFD measurement and evaluation requirement enhancement;
CBD measurement and evaluation requirement enhancement;
RLM requirement; or
RRM measurement and accuracy requirement enhancement.

According to a third aspect of embodiments of the disclosure, a communication apparatus on a terminal device side is provided. The apparatus includes:
a transceiver module configured to receive first indication information sent by a network device, in which the first indication information is configured to indicate RRM requirement enhancement.

Optionally, the transceiver module is configured to:
receive the first indication information sent by the network device via an RRC signaling, in which the terminal device is in an RRC connected state; or
receive the first indication information sent by the network device via a broadcast message, in which the terminal device is in an RRC idle state or an RRC inactive state.

Optionally, the transceiver module is configured to:
send second indication information to the network device, in which the second indication information is configured to indicate that the terminal device supports the RRM requirement enhancement.

Optionally, the terminal device supports the RRM requirement enhancement.

Optionally, the terminal device is located in a cell covered by a low earth orbiting satellite, and the apparatus further includes a processing module configured to:
perform measurement according to a first RRM requirement, in which the terminal device receives the first indication information; or
perform measurement according to a first RRM requirement, in which the terminal device supports the RRM requirement enhancement and receives the first indication information; or
perform measurement according to a second RRM requirement, in which the first indication information is not received by the terminal device; or
perform measurement according to a second RRM requirement, in which the terminal device does not support the RRM requirement enhancement.

Optionally, the transceiver module is configured to:
determine the first RRM requirement and the second RRM requirement according to an agreement of a protocol; or
determine the first RRM requirement and the second RRM requirement according to a configuration of the network device.

Optionally, the RRM requirement enhancement includes at least one of:
mobility requirement enhancement in an idle and an inactive state;
mobility requirement enhancement in a connected state;
terminal transmission timing requirement enhancement;
L1 RSRP measurement and evaluation requirement enhancement;
BFD measurement and evaluation requirement enhancement;
CBD measurement and evaluation requirement enhancement;
RLM requirement; or
RRM measurement and accuracy requirement enhancement.

According to a fourth aspect of embodiments of the disclosure, a communication apparatus on a network device side is provided. The apparatus includes:
a transceiver module configured to send first indication information to a terminal device, in which the first indication information is configured to indicate RRM requirement enhancement.

Optionally, the transceiver module is configured to:
send the first indication information to the terminal device via an RRC signaling, in which the terminal device is in an RRC connected state; or
send the first indication information to the terminal device via a broadcast message, in which the terminal device is in an RRC idle state or an RRC inactive state.

Optionally, the transceiver module is configured to:
receive second indication information sent by the terminal device, in which the second indication information is configured to indicate that the terminal device supports the RRM requirement enhancement.

Optionally, the transceiver module is configured to:
determine that the terminal device supports the RRM requirement enhancement, and send the first indication information to the terminal device; or
determine that the terminal device does not support the RRM requirement enhancement, and withhold sending the first indication information to the terminal device.

Optionally, the RRM requirement enhancement includes at least one of:
mobility requirement enhancement in the idle and inactive states;
mobility requirement enhancement in the connected state;
terminal transmission timing requirement enhancement;
L1 RSRP measurement and evaluation requirement enhancement;
BFD measurement and evaluation requirement enhancement;
CBD measurement and evaluation requirement enhancement;
RLM requirement; or
RRM measurement and accuracy requirement enhancement.

According to a fifth aspect of embodiments of the disclosure, a communication apparatus including a processor is provided. When the processor calls computer programs stored on a memory, the method according to the first aspect above is executed.

According to a sixth aspect of embodiments of the disclosure, a communication apparatus including a processor is provided. When the processor calls computer programs stored on a memory, the method according to in the second aspect above is executed.

According to a seventh aspect of embodiments of the disclosure, a communication apparatus including a processor and a memory having computer programs stored thereon is provided. When the computer programs stored on the memory are executed by the processor, the communication apparatus is caused to execute the method according to the first aspect above.

According to an eighth aspect of embodiments of the disclosure, a communication apparatus including a processor and a memory having computer programs stored thereon is provided. When the computer programs stored on the memory are executed by the processor, the communication apparatus is caused to execute the method according to the second aspect above.

According to a ninth aspect of embodiments of the disclosure, a communication apparatus including a processor and an interface circuit is provided. The interface circuit is configured to receive code instructions and send the code instructions to the processor. The processor is configured to run the code instructions to cause the communication apparatus to execute the method according to the first aspect above.

According to a tenth aspect of embodiments of the disclosure, a communication apparatus including a processor and an interface circuit is provided. The interface circuit is configured to receive code instructions and send the code instructions to the processor. The processor is configured to run the code instructions to cause the communication apparatus to execute the method according to the second aspect above.

According to an eleventh aspect of embodiments of the disclosure, a new radio and a new radio side link switching system are provided. The system includes the communication apparatus according to the third aspect and the communication apparatus according to the fourth aspect, or the system includes the communication apparatus according to the fifth aspect and the communication apparatus according to the sixth aspect, or the system includes the communication apparatus according to the seventh aspect and the communication apparatus according to the eighth aspect, or the system includes the communication apparatus according to the ninth aspect and the communication apparatus according to the tenth aspect.

According to a twelfth aspect of embodiments of the disclosure, a computer-readable storage medium for storing instructions for the above terminal device is provided. When the instructions are executed, the terminal device is caused to execute the method according to the first aspect above.

According to a thirteenth aspect of embodiments of the disclosure, a readable storage medium for storing instructions for the above network device is provided. When the instructions are executed, the network device is caused to execute the method according to the second aspect.

According to a fourteenth aspect of embodiments of the disclosure, a computer program product including computer programs is provided. When the computer program product is run on a computer, the computer is caused to execute the method according to the first aspect above.

According to a fifteenth aspect of embodiments of the disclosure, a computer program product including computer programs is provided. When the computer program product is run on a computer, the computer is caused to execute the method according to the second aspect above.

According to a sixteenth aspect of embodiments of the disclosure, a chip system is provided. The chip system includes at least one processor and an interface, and the chip system is configured for supporting the terminal device to implement the functions involved in the first aspect, e.g., determining or processing at least one of data or information involved in the method described above. In a possible design, the chip system further includes a memory. The memory is configured to store necessary computer programs and data for the terminal device. The chip system may consist of a chip or may include a chip and other discrete components.

According to a seventeenth aspect of embodiments of the disclosure, a chip system is provided. The chip system includes at least one processor and an interface, and the chip system is configured for supporting the network device to implement functions involved in the second aspect, e.g., determining or processing at least one of data or information involved in the method described above. In a possible design, the chip system further includes a memory. The memory is configured to store necessary computer programs and data for the network device. The chip system may consist of a chip or may include a chip and other discrete components.

According to an eighteenth aspect of embodiments of the disclosure, a computer program is provided. When the computer program is run on a computer, the computer is caused to execute the method according to the first aspect.

According to a nineteenth aspect of embodiments of the disclosure, a computer program is provided. When the computer program is run on a computer, the computer is caused to execute the method according to the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic diagram of a communication system according to an embodiment of the disclosure.
FIG. 2 is a flowchart of a method for indicating radio resource management (RRM) requirement enhancement according to an embodiment of the disclosure.
FIG. 3 is a flowchart of a method for indicating RRM requirement enhancement according to another embodiment of the disclosure.
FIG. 4 is a flowchart of a method for indicating RRM requirement enhancement according to another embodiment of the disclosure.
FIG. 5 is a flowchart of a method for indicating RRM requirement enhancement according to another embodiment of the disclosure.
FIG. 6 is a flowchart of a method for indicating RRM requirement enhancement according to another embodiment of the disclosure.
FIG. 7 is a flowchart of a method for indicating RRM requirement enhancement according to another embodiment of the disclosure.
FIG. 8 is a flowchart of a method for indicating RRM requirement enhancement according to another embodiment of the disclosure.
FIG. 9 is a schematic diagram of a communication apparatus according to an embodiment of the disclosure.
FIG. 10 is a schematic diagram of a communication apparatus according to another embodiment of the disclosure.
FIG. 11 is a schematic diagram of a chip according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects of the disclosure as recited in the attached claims.

For ease of understanding, terms involved in this disclosure are introduced at first.

### 1. Radio resource management (RRM)

RRM provides, under a condition of limited bandwidth, service quality assurance for wireless user terminals in a network. A basic purpose of the RRM is, in cases of uneven distribution of network traffic and fluctuation of channel characteristics due to channel fading and interference, to flexibly allocate and dynamically adjust available resources of wireless transmission portion and the network, to maximize the utilization of wireless spectrum, prevent network congestion and keep the signaling load as small as possible.

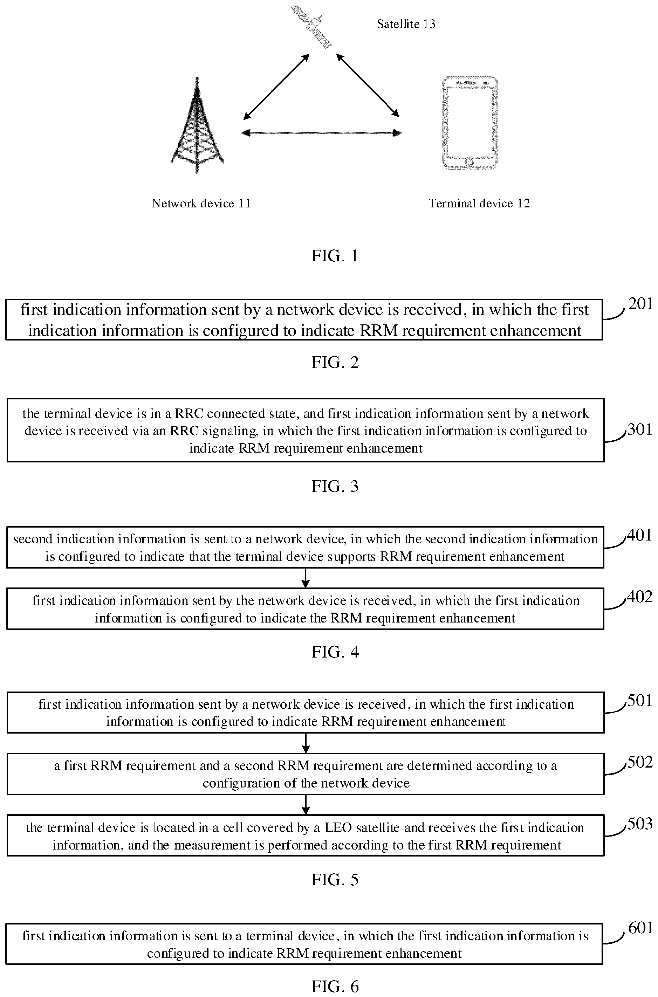

As illustrated in FIG. 1, FIG. 1 is a schematic diagram of a communication system according to an embodiment of the disclosure. The communication system may include but is not limited to one network device, one terminal device and one satellite. The number and form of the devices shown in FIG. 1 are only used for examples and do not constitute a limitation on the embodiments of the disclosure. In actual applications, two or more network devices, two or more terminal devices, and two or more satellites may be included in the communication system. For example, the communication system shown in FIG. 1 includes one network device 11, one terminal device 12 and one satellite 13.

It is noteworthy that the technical solutions of the embodiments of the disclosure may be applied to various communication systems, such as, a long term evolution (LTE) system, a 5th generation (5G) mobile communication system, a 5G new radio (NR) system, or other future new mobile communication systems.

The network device 11 in the embodiments of the disclosure may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to the embodiments of the disclosure may include a central unit (CU) and a distributed unit (DU). The CU may also be called a control unit. The use of CU-DU structure allows to divide protocol layers of the network device, such as the base station. Functions of some protocol layers are placed in the CU for centralized control, and functions of a part or all of remaining protocol layer are distributed in the DU, and the DU is centrally controlled by the CU.

The terminal device 12 in the embodiments of the disclosure is an entity, on a user side, for receiving or transmitting signals, such as a mobile phone. The terminal device may also be referred to as a terminal, a user equipment (UE), a mobile station (MS), a mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home, etc. The specific technology and specific device form adopted by the terminal device are not limited in the embodiments of the disclosure.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as the evolution of system architectures and the emergence of new business scenarios, the technical solutions according to the embodiments of the disclosure are also applicable to similar technical problems.

Generally, in a non-terrestrial network (NTN) system, when the terminal device is connected to satellites in different orbits, different RRM requirements may be required. For example, in a cell covered by a geostationary earth orbiting (GEO) satellite, since the GEO satellite is stationary relative to the ground, the RRM requirement for a terrestrial system may be reused. In a cell covered by a low earth orbiting (LEO) satellite, since the LEO satellite moves at a speed of 7.56 km/s relative to the ground, the RRM requirement for the terrestrial system cannot be reused and need to be enhanced. In the disclosure, for a scenario where the terminal device is located in the cell covered by the LEO satellite and cannot reuse the RRM requirement of the terrestrial system, a method for indicating RRM requirement enhancement is proposed, so that the terminal device performs a RRM measurement according to an enhanced RRM requirement, thereby improving a mobility performance of the terminal device.

A method for indicating RRM requirement enhancement and an apparatus for indicating RRM requirement enhancement provided by the disclosure will be described in detail below in combination with the accompanying drawings.

As illustrated in FIG. 2, FIG. 2 is a flowchart of a method for indicating RRM requirement enhancement according to an embodiment of the disclosure. The method is performed by a terminal device. As illustrated in FIG. 2, the method includes but is not limited to the following step.

At step 201, first indication information sent by a network device is received, in which the first indication information is configured to indicate RRM requirement enhancement.

The RRM requirement enhancement includes at least one of the following: mobility requirement enhancement in an idle state and an inactive state; mobility requirement enhancement in a connected state; terminal transmission timing requirement enhancement; layer-1 reference signal receiving power (L1 RSRP) measurement and evaluation requirement enhancement; bidirectional forwarding detection (BFD) measurement and evaluation requirement enhancement; candidate beam detection (CBD) measurement and evaluation requirement enhancement; radio link monitoring (RLM) requirement; and RRM measurement and accuracy requirement enhancement.

In the disclosure, in the NTN system, the terminal device may perform the RRM measurement according to the RRM requirement to ensure the mobility performance of the terminal device in the network, in which the RRM measurement may include cell detection or measurement. However, if the terminal device cannot complete the cell detection or measurement in time according to the RRM requirement, it may cause cell reselection failure and handover failure, which thereby affects the mobility performance of the terminal device. For example, in the cell covered by the LEO satellite, since the LEO satellite moves at a speed of 7.56 km/s relative to the ground, the terminal device connected to the LEO satellite is also in a high-speed moving state. When the terminal device performs the RRM measurement based on the original RRM requirement, it may not be able to complete the RRM measurement in time. In order to ensure that the terminal device is able to complete the RRM measurement in time, the RRM requirement may be enhanced, thereby improving the mobility performance of the terminal device.

The method for implementing the RRM requirement enhancement may include increasing measurement opportunities, or enhancing terminal measurement algorithm, etc., which is not limited in the disclosure.

In the disclosure, the network device may send the first indication information for indicating the RRM requirement enhancement to the terminal device. The terminal device may thus enhance the RRM requirement according to the first indication information, to ensure that the terminal device is able to complete the RRM measurement in time.

In the disclosure, the terminal device may receive the first indication information for indicating the RRM requirement enhancement sent by the network device and perform the RRM requirement enhancement according to the first indication information, and then execute the RRM measurement according to the enhanced RRM requirement, in order to ensure that the RRM measurement may be completed in time, thereby improving the mobile performance of the terminal device.

As illustrated in FIG. 3, FIG. 3 is a flowchart of a method for indicating RRM requirement enhancement according to an embodiment of the disclosure. The method is performed by a terminal device. As illustrated in FIG. 3, the method includes but is not limited to the following step.

At step 301, the terminal device is in a radio resource control (RRC) connected state, and first indication information sent by a network device is received via an RRC signaling, in which the first indication information is configured to indicate RRM requirement enhancement.

The RRM requirement enhancement includes at least one of the following: mobility requirement enhancement in an idle state and an inactive states; mobility requirement enhancement in a connected state; terminal transmission timing requirement enhancement; L1 RSRP measurement and evaluation requirement enhancement; BFD measurement and evaluation requirement enhancement; CBD measurement and evaluation requirement enhancement; RLM requirement; and RRM measurement and accuracy requirement enhancement.

In the disclosure, when the terminal device is in the RRC connected state, the network device may configure the first indication information into the RRC signaling. The terminal device may obtain the first indication information by parsing the received RRC signaling sent by the network device, and enhance the RRM requirement according to the first indication information, in order to ensure that the terminal device is able to complete the RRM measurement in time.

Optionally, when the terminal device is in an RRC idle state or an RRC inactive state, the terminal device may receive the first indication information sent by the network device via a broadcast message.

In the disclosure, when the terminal device is in the RRC idle state or the RRC inactive state, the network device may send the first indication information to the terminal device via the broadcast message. After receiving the first indication information, the terminal device may thus enhance the RRM requirement according to the first indication information, in order to ensure that the terminal device is able to perform the RRM measurement normally.

In the disclosure, when the terminal device is in the RRC connected state, the terminal device may receive the first indication information, sent by the network device, for indicating the RRM request enhancement via the RRC signaling. The terminal device may then perform the RRM requirement enhancement according to the first indication information, and then execute the RRM measurement according to the enhanced RRM requirement, in order to ensure that the RRM measurement is completed in time, thereby improving the mobile performance of the terminal device.

As illustrated in FIG. 4, FIG. 4 is a flowchart of a method for indicating RRM requirement enhancement according to an embodiment of the disclosure. The method is performed by a terminal device. As illustrated in FIG. 4, the method includes but is not limited to the following steps.

At step 401, second indication information is sent to a network device, in which the second indication information is configured to indicate that the terminal device supports RRM requirement enhancement.

In the disclosure, the terminal device may support different RRM requirements due to different hardware configurations of the terminal device, the terminal device may send the second indication information for indicating that the terminal device supports the RRM requirement enhancement to the network device. In this way, the network device may indicate the terminal device to perform the RRM requirement enhancement after determining that the terminal device supports the RRM request enhancement, which may avoid a failure of the RRM requirement enhancement caused by the terminal device not supporting the RRM requirement enhancement, and further avoid a failure of measurement performed by the terminal device using a first RRM requirement.

At step 402, first indication information sent by the network device is received, in which the first indication information is configured to indicate the RRM requirement enhancement.

In the disclosure, the specific implementation process of receiving the first indication information sent by the network device may be referred to the detailed description of any of the embodiments of the disclosure, which will not be repeated herein.

Optionally, the terminal device may receive the first indication information sent by the network device in a case of the terminal device supporting the RRM requirement enhancement. In the case where the terminal device does not support the RRM requirement enhancement, the terminal device may not receive the first indication information sent by the network device, thereby avoiding a waste of communication resources.

In the disclosure, after sending the second indication information for indicating that the terminal device supports the RRM requirement enhancement to the network device, the terminal device may receive the first indication information for indicating the RRM requirement enhancement sent by the network device. The terminal device may then perform the RRM requirement enhancement according to the first indication information and execute the RRM measurement according to the enhanced RRM requirement, in order to ensure that the RRM measurement is completed in time, thereby improving the mobility performance of the terminal device.

As illustrated in FIG. 5, FIG. 5 is a flowchart of a method for indicating RRM requirement enhancement according to an embodiment of the disclosure. The method is performed by a terminal device. As illustrated in FIG. 5, the method includes but is not limited to the following steps.

At step 501, first indication information sent by a network device is received, in which the first indication information is configured to indicate RRM requirement enhancement.

In the disclosure, the specific implementation process of step 501 may be referred to the detailed description of any of the embodiments of the disclosure and will not be repeated herein.

At step 502, a first RRM requirement and a second RRM requirement are determined according to a configuration of the network device.

The first RRM requirement may be an enhanced RRM requirement, and the second RRM requirement may be a directly configured RRM requirement.

In the disclosure, the first indication information for indicating the RRM requirement enhancement may be configured by the network device, or the first indication information for indicating the RRM requirement enhancement may be agreed upon via a protocol. The terminal device may enhance the RRM requirement based on the first indication information to determine the first RRM requirement.

In the disclosure, the second RRM requirement may be configured by the network device, or the second RRM requirement may also be agreed upon via a protocol. The terminal device may perform the RRM measurement directly based on the second RRM requirement.

At step 503, the terminal device is located in a cell covered by a LEO satellite and receives the first indication information, and the measurement is performed according to the first RRM requirement.

When the terminal device performs the RRM measurement according to the enhanced RRM requirement, additional resource consumption may be caused. The RRM requirement for the terrestrial system may be reused in the cell covered by a high earth orbiting satellite, and the RRM requirement for the terrestrial system cannot be reused in the cell covered by the LEO satellite. Therefore, in the disclosure, the measurement may be performed according to the first RRM requirement only in the case where the terminal device is located in the cell covered by the LEO satellite and receives the first indication information, thereby avoiding the waste of resources while ensuring that the terminal device is able to complete the RRM measurement in time.

Optionally, if the terminal device is located in the cell covered by the LEO satellite, supports the RRM requirement enhancement, and receives the first indication information, the measurement is performed according to the first RRM requirement.

In the disclosure, when the terminal device is located in the cell covered by the LEO satellite, whether the terminal device supports the RRM requirement enhancement or not may be determined by querying. In a case where the terminal device supports the RRM requirement enhancement and receives the first indication information, the measurement may be performed according to the first RRM requirement, which may thereby avoid a failure of the RRM requirement enhancement caused by the terminal device not supporting the RRM requirement enhancement, and further avoid a failure of measurement performed by the terminal device using the first RRM requirement.

Optionally, if the terminal device is located in the cell covered by the LEO satellite and does not receive the first indication information, the measurement is performed according to the second RRM requirement.

Optionally, if the terminal device is located in the cell covered by the LEO satellite and does not support the RRM requirement enhancement, the measurement is performed according to the second RRM requirement.

In the disclosure, after receiving the first indication information for indicating the RRM requirement enhancement sent by the network device, the terminal device may determine the first RRM requirement and the second RRM requirement according to the configuration of the network device. In a case where the terminal device is located in the cell covered by the LEO satellite and has received the first indication information, the terminal device may perform the measurement according to the first RRM requirement, in order to ensure that the RRM measurement is completed in time, thereby improving the mobility performance of the terminal device.

As illustrated in FIG. 6, FIG. 6 is a flowchart of a method for indicating RRM requirement enhancement according to an embodiment of the disclosure. The method is performed by a network device. As illustrated in FIG. 6, the method includes but is not limited to the following step.

At step 601, first indication information is sent to a terminal device, in which the first indication information is configured to indicate RRM requirement enhancement.

The RRM requirement enhancement includes at least one of the following: mobility requirement enhancement in an idle state and an inactive states; mobility requirement enhancement in a connected state; terminal transmission timing requirement enhancement; L1 RSRP measurement and evaluation requirement enhancement; BFD measurement and evaluation requirement enhancement; CBD measurement and evaluation requirement enhancement; RLM requirement; and RRM measurement and accuracy requirement enhancement.

In the disclosure, in the NTN system, the terminal device may perform the RRM measurement according to the RRM requirement to ensure the mobility performance of the terminal device in the network, in which the RRM measurement may include cell detection or measurement. However, if the terminal device cannot complete the cell detection or measurement in time according to the RRM requirement, it may cause cell reselection failure and handover failure, thereby affecting the mobility performance of the terminal device. For example, in a cell covered by the LEO satellite, since the LEO satellite moves at a speed of 7.56 km/s relative to the ground, the terminal device connected to the LEO satellite is also in a high-speed moving state. When the terminal device performs the RRM measurement based on the original RRM requirement, it may not be able to complete the RRM measurement in time. In order to ensure that the terminal device is able to complete the RRM measurement in time, the RRM requirement may be enhanced, thereby improving the mobility performance of the terminal device.

The method for implementing the RRM requirement enhancement may include increasing measurement opportunities, or enhancing terminal measurement algorithm, etc., which is not limited in the disclosure.

In the disclosure, the network device may send the first indication information for indicating the RRM requirement enhancement to the terminal device. The terminal device may thus enhance the RRM requirement according to the first indication information, to ensure that the terminal device is able to complete the RRM measurement in time.

In the disclosure, the network device may send the first indication information for indicating the RRM requirement enhancement to the terminal device, and the terminal device may perform the RRM requirement enhancement according to the first indication information, and then perform the RRM measurement according to the enhanced RRM requirement, to ensure that the RRM measurement is completed in time, thereby improving the mobile performance of the terminal device.

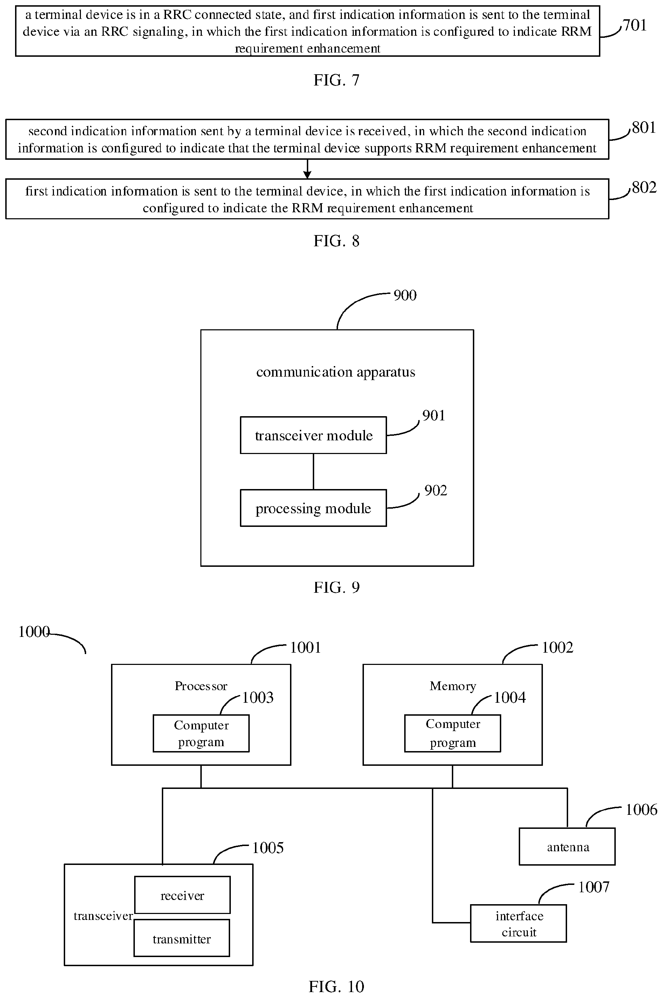

As illustrated in FIG. 7, FIG. 7 is a flowchart of a method for indicating RRM requirement enhancement according to an embodiment of the disclosure. The method is performed by a network device. As illustrated in FIG. 7, the method includes but is not limited to the following step.

At step 701, a terminal device is in an RRC connected state, and first indication information is sent to the terminal device via an RRC signaling, in which the first indication information is configured to indicate RRM requirement enhancement.

The RRM requirement enhancement includes at least one of the following: mobility requirement enhancement in the idle and inactive states; mobility requirement enhancement in the connected state; terminal transmission timing requirement enhancement; L1 RSRP measurement and evaluation requirement enhancement; BFD measurement and evaluation requirement enhancement; CBD measurement and evaluation requirement enhancement; RLM requirement; and RRM measurement and accuracy requirement enhancement.

In the disclosure, when the terminal device is in the RRC connected state, the network device may configured the first indication information into the RRC signaling. The terminal device may obtain the first indication information by parsing the received RRC signaling sent by the network device, and enhance the RRM requirement according to the first indication information, in order to ensure that the terminal device is able to complete the RRM measurement in time.

Optionally, when the terminal device is in an RRC idle state or an RRC inactive state, the network device may send the first indication information to the terminal device via a broadcast message.

In the disclosure, when the terminal device is in the RRC idle state or the RRC inactive state, the network device may send the first indication information to the terminal device via the broadcast message. After receiving the first indication information, the terminal device may thus enhance the RRM requirement according to the first indication information, in order to ensure that the terminal device is able to complete the RRM measurement in time.

In the disclosure, when the terminal device is in the RRC connected state, the network device may send the first indication information for indicating the RRM requirement enhancement to the terminal device via the RRC signaling. The terminal device may then perform the RRM requirement enhancement according to the first indication information, and then execute the RRM measurement based on the enhanced RRM requirement, in order to ensure that the RRM measurement is completed in time, thereby improving the mobility performance of the terminal device.

As illustrated in FIG. 8, FIG. 8 is a flowchart of a method for indicating RRM requirement enhancement according to an embodiment of the disclosure. The method is performed by a network device. As illustrated in FIG. 8, the method includes but is not limited to the following steps.

At step 801, second indication information sent by a terminal device is received, in which the second indication information is configured to indicate that the terminal device supports RRM requirement enhancement.

In the disclosure, the terminal device may support different RRM requirements due to different hardware configurations of the terminal device, the terminal device may send the second indication information for indicating that the terminal device supports the RRM requirement enhancement to the network device. In this way, the network device may indicate the terminal device to perform the RRM requirement enhancement after determining that the terminal device supports the RRM request enhancement, which may avoid the failure of the RRM requirement enhancement caused by the terminal device not supporting the RRM request enhancement, and further avoid the failure of measurement performed by the terminal device using the first RRM requirement.

At step 802, first indication information is sent to the terminal device, in which the first indication information is configured to indicate the RRM requirement enhancement.

In the disclosure, the specific implementation process of sending the first indication information to the terminal device may be referred to the detailed description of any of the embodiments of the disclosure, which will not be repeated herein.

Optionally, the network device may send the first indication information to the terminal device in a case of determining that the terminal device supports the RRM request enhancement, or the network device does not send the first indication information to the terminal device in a case of determining that the terminal device does not support the RRM request enhancement, thereby avoiding the waste of communication resources.

In the disclosure, after receiving the second indication information, sent by the terminal device, for indicating that the terminal device supports the RRM requirement enhancement, the network device may send the first indication information for indicating the RRM requirement enhancement to the terminal device. The terminal device may then perform the RRM requirement enhancement according to the first indication information and execute the RRM measurement according to the enhanced RRM requirement, in order to ensure that the RRM measurement is completed in time, thereby improving the mobility performance of the terminal device.

As illustrated in FIG. 9, FIG. 9 is a schematic diagram of a communication apparatus 900 according to an embodiment of the disclosure. The communication apparatus 900 shown in FIG. 9 may include a transceiver module 901. The transceiver module 901 may include a transmitting module and/or a receiving module. The transmitting module is configured for implementing a transmitting function, and the receiving module is configured for implementing a receiving function. The transceiver module 901 may implement the transmitting function and/or the receiving function.

It is able to understand that the communication apparatus 900 may be a terminal device, an apparatus in the terminal device, or an apparatus capable of being used in combination with the terminal device.

The communication apparatus 900 is provided on a terminal device side, in which:
the transceiver module 901 is configured to receive first indication information sent by a network device, in which the first indication information is configured to indicate RRM requirement enhancement.

Optionally, the transceiver module 901 is configured to:
receive the first indication information sent by the network device via an RRC signaling, in which the terminal device is in an RRC connected state; or
receive the first indication information sent by the network device via a broadcast message, in which the terminal device is in an RRC idle state or an RRC inactive state.

Optionally, the transceiver module 901 is further configured to:
send second indication information sent to the network device, in which the second indication information is configured to indicate that the terminal device supports the RRM requirement enhancement.

Optionally, the terminal device supports the RRM requirement enhancement.

Optionally, the terminal device is located in a cell covered by a LEO satellite, and the apparatus further includes a processing module 902 configured to:
perform measurement according to a first RRM requirement, in which the terminal device receives the first indication information; or
perform measurement according to a first RRM requirement, in which the terminal device supports the RRM requirement enhancement and receives the first indication information; or
perform measurement according to a second RRM requirement, in which the first indication information is not received by the terminal device; or
perform measurement according to a second RRM requirement, in which the terminal device does not support the RRM requirement enhancement.

Optionally, the processing module 902 is further configured to:
determine the first RRM requirement and the second RRM requirement according to an agreement of a protocol; or
determine the first RRM requirement and the second RRM requirement according to a configuration of the network device.

Optionally, the RRM requirement enhancement includes at least one of the following:
mobility requirement enhancement in the idle and inactive states;
mobility requirement enhancement in the connected state;
terminal transmission timing requirement enhancement;
L1 RSRP measurement and evaluation requirement enhancement;
BFD measurement and evaluation requirement enhancement;
CBD measurement and evaluation requirement enhancement;
RLM requirement; and
RRM measurement and accuracy requirement enhancement.

In the disclosure, the terminal device may receive the first indication information for indicating the RRM requirement enhancement sent by the network device and then perform the RRM requirement enhancement according to the first indication information, and then perform the RRM measurement according to the enhanced RRM requirement, to ensure that the RRM measurement is completed in time, thereby improving the mobility performance of the terminal device.

It is noted that the above embodiments of the apparatus are obtained based on the method embodiments, and the specific description may be referred to the section of method embodiments, which will not be repeated herein.

It is able to understand that the communication apparatus 900 may be a network device, a device in the network device, or a device capable of being used in combination with the network device.

The communication apparatus 900 is provided on a network device side,
the transceiver module is configured to: send first indication information to a terminal device, in which the first indication information is configured to indicate RRM requirement enhancement.

Optionally, the transceiver module 901 is configured to:
send the first indication information to the terminal device via an RRC signaling, in which the terminal device is in an RRC connected state; or
send the first indication information to the terminal device via a broadcast message, in which the terminal device is in an RRC idle state or an RRC inactive state.

Optionally, the transceiver module 901 is configured to:
receive second indication information sent by the terminal device, in which the second indication information is configured to indicate that the terminal device supports the RRM requirement enhancement.

Optionally, the transceiver module 901 is configured to:
determine that the terminal device supports the RRM requirement enhancement, and send the first indication information to the terminal device; or
determine that the terminal device does not support the RRM requirement enhancement, and withhold sending the first indication information to the terminal device.

Optionally, the RRM requirement enhancement includes at least one of the following:
mobility requirement enhancement in the idle and inactive states;
mobility requirement enhancement in the connected state;
terminal transmission timing requirement enhancement;
L1 RSRP measurement and evaluation requirement enhancement;
BFD measurement and evaluation requirement enhancement;
CBD measurement and evaluation requirement enhancement;
RLM requirement; and
RRM measurement and accuracy requirement enhancement.

In the disclosure, the network device may send the first indication information for indicating the RRM requirement enhancement to the terminal device. The terminal device may perform the RRM requirement enhancement according to the first indication information and then perform the RRM measurement according to the enhanced RRM requirement, to ensure that the RRM measurement is completed in time, thereby improving the mobility performance of the terminal device.

It is noted that the above embodiments of the apparatus are obtained based on the method embodiments, and the specific description may be referred to the section of method embodiments, which will not be repeated herein.

As illustrated in FIG. 10, FIG. 10 is a schematic diagram of a communication apparatus 1000 provided by another embodiment of the disclosure. The communication apparatus 1000 may be a network device, a terminal device, or a chip, a chip system or a processor that supports the network device to implement the above methods, or a chip, a chip system or a processor that supports the terminal device to implement the above methods. The apparatus may be configured to implement the methods described in the above method embodiments with reference to the description of the above method embodiments.

The communication apparatus 1000 may include one or more processors 1001. The processor 1001 may be a general purpose processor or a dedicated processor, such as, a baseband processor or a central processor. The baseband processor is configured for processing communication protocols and communication data. The central processor is configured for controlling the communication apparatus (e.g., a base station, a baseband chip, a terminal device, a terminal device chip, a DU, or a CU), executing computer programs, and processing data of the computer programs.

Optionally, the communication apparatus 1000 may include one or more memories 1002 on which a computer program 1004 may be stored. The processor 1001 executes the computer program 1004 to cause the communication apparatus 1000 to execute the methods described in the above method embodiments. Optionally, the memory 1002 may also configured to store data. The communication apparatus 1000 and the memory 1002 may be provided separately or may be integrated together.

Optionally, the communication apparatus 1000 may also include a transceiver 1005 and an antenna 1006. The transceiver 1005 may be referred to as a transceiver unit, a transceiver machine, or a transceiver circuit, for realizing a transceiver function. The transceiver 1005 may include a receiver and a transmitter. The receiver may be referred to as a receiver machine or a receiving circuit, for realizing a receiving function. The transmitter may be referred to as a transmitter machine or a transmitting circuit, for realizing a transmitting function.

Optionally, the communication apparatus 1000 may also include one or more interface circuits 1007. The interface circuits 1007 are configured to receive code instructions and transmit the code instructions to the processor 1001. The processor 1001 runs the code instructions to cause the communication apparatus 1000 to execute the method described in the method embodiments.

The communication apparatus 1000 is a terminal device, the processor 1001 is configured to execute steps 502 and 503 in FIG. 5.

The communication apparatus 1000 is a network device, the transceiver 1005 is configured to execute step 601 in FIG. 6, step 701 in FIG. 7, and steps 801 and 802 in FIG. 8, etc.

In an implementation, the processor 1001 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be configured for code/data reading and writing, or may be configured for signal transmission or delivery.

In an implementation, the processor 1001 may be used to store a computer program 1003. When the computer program 1003 is run on the processor 1001, the communication apparatus 1000 is caused to execute the methods described in the method embodiments above. The computer program 1003 may be solidified in the processor 1001, in which case the processor 1001 may be implemented by hardware.

In an implementation, the communication apparatus 1000 may include a circuit. The circuit may implement the sending, receiving or communicating function in the method embodiments above. The processor and the transceiver described in this disclosure may be implemented on an integrated circuit (IC), an analog IC, a radio frequency integrated circuit (RFIC), a mixed signal IC, an application specific integrated circuit (ASIC), a printed circuit board (PCB), and an electronic device. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network device or an access network device (e.g., the terminal device in the above method embodiments), but the scope of the communication apparatus described in the disclosure is not limited thereto, and the structure of the communication apparatus may not be limited by FIG. 10. The communication apparatus may be a stand-alone device or may be part of a larger device. For example, the described communication apparatus may be:
(1) a stand-alone IC, a chip, a chip system or subsystem;
(2) a set including one or more ICs, optionally, the IC set may also include a storage component for storing data and computer programs;
(3) an ASIC, such as a modem;
(4) a module that may be embedded within other devices;
(5) a receiver machine, a terminal device, a smart terminal device, a cellular phone, a wireless device, a handheld machine, a mobile unit, an in-vehicle device, a network device, a cloud device, an artificial intelligence device, and the like; and
(6) others.

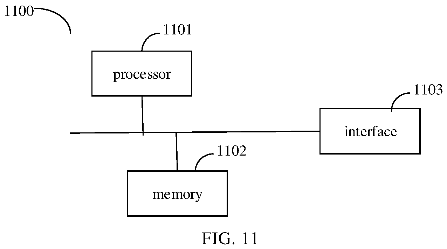

The case where the communication apparatus may be the chip or the chip system may be referred to the schematic diagram of the chip shown in FIG. 11. In FIG. 11, the chip includes a processor 1101 and an interface 1103. There may be one or more processors 1101, and there may be a plurality of interfaces 1103.

For the case where the chip is configured to implement the functions of the terminal device in the embodiments of the disclosure:

the interface 1103 is configured to perform step 201 of FIG. 2, step 301 of FIG. 3, step 401 of FIG. 4, and step 501 of FIG. 5.

For the case where the chip is configured to implement the functions of the network device in the embodiments of the disclosure,

the interface 1103 is configured to perform step 601 in FIG. 6, step 701 in FIG. 7, and steps 801 and 802 in FIG. 8.

Optionally, the chip further includes a memory 1102 configured to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the function, but such implementation should not be construed as being beyond the scope of protection of the embodiments of the disclosure.

The disclosure also provides a readable storage medium having instructions stored thereon. When the instructions are executed by a computer, the function of any one of the method embodiments described above is implemented.

The disclosure also provides a computer program product. When the computer program product is executed by a computer, the function of any one of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions according to the embodiments of the disclosure are implemented. The computer may be a general-purpose computer, a dedicated computer, a computer network, or other programmable apparatuses. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., a coaxial cable, a fiber optic, or a digital subscriber lines (DSL) or in a wireless manner (e.g., infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

It is further understood that the term "a plurality" in the disclosure refers to two or more, which is similar for other quantifiers. The term "and/or" describes a relation of associated objects, which indicates three relations, for example, "A and/or B" indicates that A exists alone, A and B both exist, and B exists alone. The character "/" generally indicates that the associated objects prior to and after the character "/" is an "or" relation. The terms "a/an", "said" and "the" in the singular form are also intended to include the plural form, unless the context clearly indicates otherwise.

It is further understood that although the operations are depicted in the accompanying drawings in a particular order in the embodiments of the disclosure, it should not be construed as requiring that the operations are performed in the particular sequence shown or in a serial sequence, or that all of the operations shown be performed to obtain the desired results. Multitasking and parallel processing may be advantageous in particular environments.

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "a plurality" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, appropriate deformation adjustments may be made based on the above table, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, scatter list or Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above may be referred to the corresponding processes in the above method embodiments, and will not be repeated herein.

After considering the specification and practicing the present disclosure, other embodiments of the disclosure will be apparent to those skilled in the art. This application is intended to cover any variations, uses, or adaptive changes of the disclosure, which follow the general principles of the disclosure and include common knowledge or customary technical means in the technical filed not disclosed in the disclosure. The specification and examples are only considered exemplary, and a true scope and spirit of the disclosure are indicated by the following claims.

The above is only specific implementations of the disclosure, but the scope of protection of the disclosure is not limited to this. Any skilled person familiar with the technical filed may easily think of changes or replacements within the scope of the disclosure, and those changes or replacements should be included in the scope of protection of the present disclosure. Therefore, the scope of protection of the disclosure should be based on the scope of protection of the attached claims.

## Claims

1. A method for indicating radio resource management (RRM) requirement enhancement, performed by a terminal device, comprising:
receiving first indication information sent by a network device, wherein the first indication information is configured to indicate RRM requirement enhancement.

2. The method of claim 1, wherein receiving the first indication information sent by the network device comprises:
receiving the first indication information sent by the network device via a radio resource control (RRC) signaling, wherein the terminal device is in an RRC connected state; or
receiving the first indication information sent by the network device via a broadcast message, wherein the terminal device is in an RRC idle state or an RRC inactive state.

3. The method of claim 1, further comprising:
sending second indication information to the network device, wherein the second indication information is configured to indicate that the terminal device supports the RRM requirement enhancement.

4. The method of claim 3, wherein the terminal device supports the RRM requirement enhancement.

5. The method of any one of claims 1 to 3, wherein the terminal device is located in a cell covered by a low earth orbiting satellite, and the method further comprises:
receiving, by the terminal device, the first indication information, and performing measurement according to a first RRM requirement; or
receiving, by the terminal device, the first indication information, and performing measurement according to a first RRM requirement, wherein the terminal device supports the RRM requirement enhancement; or
withholding receiving, by the terminal device, the first indication information, and performing measurement according to a second RRM requirement; or
performing measurement according to a second RRM requirement, wherein the terminal device does not support the RRM requirement enhancement.

6. The method of any one of claims 1-5, wherein the RRM requirement enhancement comprises at least one of:
mobility requirement enhancement in an idle state and an inactive state;
mobility requirement enhancement in a connected state;
terminal transmission timing requirement enhancement;
layer-1 (L1) reference signal receiving power (RSRP) measurement and evaluation requirement enhancement;
bidirectional forwarding detection (BFD) measurement and evaluation requirement enhancement;
candidate beam detection (CBD) measurement and evaluation requirement enhancement;
radio link monitoring (RLM) requirement; or
RRM measurement and accuracy requirement enhancement.

7. A method for indicating radio resource management (RRM) requirement enhancement, performed by a network device, comprising:
sending first indication information to a terminal device, wherein the first indication information is configured to indicate RRM requirement enhancement.

8. The method of claim 7, wherein sending the first indication information to the terminal device comprises:
sending the first indication information to the terminal device via a radio resource control (RRC) signaling, wherein the terminal device is in an RRC connected state; or
sending the first indication information to the terminal device via a broadcast message, wherein the terminal device being in an RRC idle state or an RRC inactive state.

9. The method of claim 7, further comprising:
receiving second indication information sent by the terminal device, wherein the second indication information is configured to indicate that the terminal device supports the RRM requirement enhancement.

10. The method of claim 9, wherein sending the first indication information to the terminal device comprises:
determining that the terminal device supports the RRM requirement enhancement, and sending the first indication information to the terminal device; or
determining that the terminal device does not support the RRM requirement enhancement, and withholding sending the first indication information to the terminal device.

11. The method of any one of claims 7 to 10, wherein the RRM requirement enhancement comprises at least one of:
mobility requirement enhancement in an idle state and an inactive state;
mobility requirement enhancement in a connected state;
terminal transmission timing requirement enhancement;
layer-1 (L1) reference signal receiving power (RSRP) measurement and evaluation requirement enhancement;
bidirectional forwarding detection (BFD) measurement and evaluation requirement enhancement;
candidate beam detection (CBD) measurement and evaluation requirement enhancement;
radio link monitoring (RLM) requirement; or
RRM measurement and accuracy requirement enhancement.

12. A communication apparatus, comprising:
a transceiver module configured to receive first indication information sent by a network device, wherein the first indication information is configured to indicate radio resource management (RRM) requirement enhancement.

13. The apparatus of claim 12, wherein the transceiver module is configured to:
receive the first indication information sent by the network device via an RRC signaling, wherein the terminal device is in an RRC connected state; or
receive the first indication information sent by the network device via a broadcast message, wherein the terminal device is in an RRC idle state or an RRC inactive state.

14. The apparatus of claim 12, wherein the transceiver module is configured to:
send second indication information to the network device, wherein the second indication information is configured to indicate that the terminal device supports the RRM requirement enhancement.

15. The apparatus of claim 14, wherein the terminal device supports the RRM requirement enhancement.

16. The apparatus of any one of claims 12 to 14, wherein the terminal device is located in a cell covered by a low earth orbiting satellite, and the apparatus further comprises a processing module configured to:
perform measurement according to a first RRM requirement, wherein the terminal device receives the first indication information; or
perform measurement according to a first RRM requirement, wherein the terminal device supports the RRM requirement enhancement and receives the first indication information; or
perform measurement according to a second RRM requirement, wherein the first indication information is not received by the terminal device; or
perform measurement according to a second RRM requirement, wherein the terminal device does not support the RRM requirement enhancement.

17. The apparatus of any one of claims 12 to 16, wherein the RRM requirement enhancement comprises at least one of:
mobility requirement enhancement in an idle and an inactive state;
mobility requirement enhancement in a connected state;
terminal transmission timing requirement enhancement;
layer-1 (L1) reference signal receiving power (RSRP) measurement and evaluation requirement enhancement;
bidirectional forwarding detection (BFD) measurement and evaluation requirement enhancement;
candidate beam detection (CBD) measurement and evaluation requirement enhancement;
radio link monitoring (RLM) requirement; or
RRM measurement and accuracy requirement enhancement.

18. A communication apparatus, comprising:
a transceiver module configured to send first indication information to a terminal device, wherein the first indication information is configured to indicate RRM requirement enhancement.

19. The apparatus of claim 18, wherein the transceiver module is configured to:
send the first indication information to the terminal device via a radio resource control (RRC) signaling, wherein the terminal device is in an RRC connected state; or
send the first indication information to the terminal device via a broadcast message, wherein the terminal device is in an RRC idle state or an RRC inactive state.

20. The apparatus of claim 18, wherein the transceiver module is configured to:
receive second indication information sent by the terminal device, wherein the second indication information is configured to indicate that the terminal device supports the RRM requirement enhancement.

21. The apparatus of claim 20, wherein the transceiver module is configured to:
determine that the terminal device supports the RRM requirement enhancement, and send the first indication information to the terminal device; or
determine that the terminal device does not support the RRM requirement enhancement, and withhold sending the first indication information to the terminal device.

22. The apparatus of any one of claims 18 to 21, wherein the RRM requirement enhancement comprises at least one of:
mobility requirement enhancement in an idle state and an inactive state;
mobility requirement enhancement in a connected state;
terminal transmission timing requirement enhancement;
layer-1 (L1) reference signal receiving power (RSRP) measurement and evaluation requirement enhancement;
bidirectional forwarding detection (BFD) measurement and evaluation requirement enhancement;
candidate beam detection (CBD) measurement and evaluation requirement enhancement;
radio link monitoring (RLM) requirement; or
RRM measurement and accuracy requirement enhancement.

23. A communication apparatus comprising a processor and a memory having stored therein computer programs that, when executed by the processor, cause the communication apparatus to implement the method of any one of claims 1 to 6 or the method of any one of claims 7 to 11.

24. A computer-readable storage medium having stored therein instructions that, when executed, implement the method of any one of claims 1-6 or the method of any one of claims 7-11.
